# EUROPÄISCHE PATENTSCHRIFT

(11) **EP 2 697 105 B1**
(45) Veröffentlichungstag und Bekanntmachung des Hinweises auf die Patenterteilung: **25.11.2015**
(21) Anmeldenummer: 12712958.3
(22) Anmeldetag: 28.03.2012
(51) Int. Cl.: B60T 13/57

(54) **BREMSKRAFTVERSTÄRKER MIT STELLUNGSABHÄNGIGEM DRUCKAUSGLEICH**
BRAKE BOOSTER WITH POSITION-DEPENDENT PRESSURE EQUALIZATION
SERVOFREIN À COMPENSATION DE PRESSION DÉPENDANT DE LA POSITION

(30) Priorität: 12.04.2011 DE 102011016830
(43) Veröffentlichungstag der Anmeldung: 19.02.2014
(73) Patentinhaber: Lucas Automotive GmbH, 56070 Koblenz (DE)
(72) Erfinder: LOPEZ LAREQUI, David, 56072 Koblenz (DE); GIESE, Hans Martin, 56751 Polch (DE)
(74) Vertreter: Thum, Bernhard
(86) Internationale Anmeldenummer: PCT/EP2012/001371
(87) Internationale Veröffentlichungsnummer: WO 2012/139709

(56) Entgegenhaltungen:
- DE-A1- 4 227 879
- DE-A1-102007 049 122

## Beschreibung

Die vorliegende Erfindung betrifft einen Bremskraftverstärker mit stellungsabhängigem Druckausgleich für eine Kraftfahrzeugbremsanlage, umfassend ein mit einem Bremspedal verbundenes oder verbindbares Krafteingangsglied, eine Kammeranordnung mit einer Arbeitskammer und einer Unterdruckkammer, die über eine bewegliche Wand voneinander getrennt sind, und eine Steuereinrichtung mit einem Steuerventil, über das in Folge einer Verlagerung des Krafteingangsglieds die Arbeitskammer wahlweise mit der Unterdruckkammer oder der Umgebungsatmosphäre verbindbar ist, wobei das Steuerventil ein mit der beweglichen Wand gekoppeltes Steuerventilgehäuse aufweist, in dem das Krafteingangsglied zusammen mit einem Steuerkolben gegen die Wirkung einer Rückstellfeder verlagerbar geführt ist, und wobei weiter das Steuerventil ein Ventilelement aufweist, das mittels einer Spannfeder wahlweise in dichtende Anlage mit einem ersten Ventilsitz, der an dem Steuerventilgehäuse vorgesehen ist, und in dichtende Anlage mit einem zweiten Ventilsitz vorgespannt ist, der an dem Steuerkolben des Steuerventils vorgesehen ist.

Derartige Bremskraftverstärker sind aus dem Stand der Technik bekannt. So zeigt beispielsweise das Dokument DE 42 27 879 A1 einen solchen Bremskraftverstärker. Mit diesem wird in an sich bekannter Weise eine über ein Krafteingangsglied ausgeübte Betätigungskraft auf einen Steuerkolben übertragen, an dem ein Dichtsitz zwischen der Arbeitskammer und der Umgebungsatmosphäre angebracht ist. Durch Betätigung des Krafteingangsglieds und mit diesem des Steuerkolbens wird dieser Dichtsitz von dem Ventilelement abgehoben, so dass es zu einer fluidischen Verbindung zwischen der Umgebungsatmosphäre und der Arbeitskammer kommt. Demzufolge baut sich in der Arbeitskammer ein Überdruck gegenüber der Unterdruckkammer auf, der auf die bewegliche Wand einwirkt und das Steuerventilgehäuse zur Unterstützung der Betätigungskraft verschiebt, bis sich ein Gleichgewichtszustand in vorgerückter Stellung des Steuerventilgehäuses ausbildet und beide Ventilsitze wieder am Ventilelement in Anlage kommen. Wird das Krafteingangsglied durch Reduzieren einer Pedalbetätigungskraft wieder freigegeben, so wird das Ventilelement unter der Wirkung einer Rückstellfeder von dem Steuerkolben zurückgeschoben, so dass sich der zweite Dichtsitz zwischen Arbeitskammer und Unterdruckkammer öffnet und ein Druckausgleich an der beweglichen Wand erfolgen kann. Sobald der Druckausgleich erfolgt ist, stellt sich wieder der Ausgangszustand ein. Um eine sichere Funktionsweise zu gewährleisten, wird das Ventilelement über eine Spannfeder derart vorgespannt, dass seine Dichtfläche auf die beiden Ventilsitze zu gespannt wird. Dies bedeutet aber dass bei der vorstehend genannten Rückstellbewegung nach Freigabe des Bremspedals über die Rückstellfeder eine hinreichend große Kraft ausgeübt werden muss, die auch die dieser Kraft entgegen wirkende Vorspannkraft der Spannfeder am Ventilelement überwindet.

Es hat sich in der Vergangenheit gezeigt und wurde dementsprechend bei dem oben genannten Dokument DE 42 27 879 A1 realisiert, dass es vorteilhaft sein kann, wenn das Ventilelement druckentlastet wird. Durch eine solche Druckentlastung kann erreicht werden, dass das Ansprechverhalten aber auch die Rückstellbewegung nicht durch unerwünschte Differenzdrücke am Ventilelement behindert werden. Aus diesem Grund sieht das oben genannte Dokument DE 42 27 879 A1 vor, dass in dem Ventilelement eine Mehrzahl von Druckausgleichsöffnungen angebracht ist, die einen permanenten Druckausgleich zwischen beiden Seiten des Ventilelements ermöglicht.

Ähnliche Lösungen finden sich in einer Vielzahl von Dokumenten zum Stand der Technik, wie beispielsweise in dem Dokument DE 44 41 149 A1, dem Dokument EP 0 802 870 B1 sowie dem Dokument EP 0 950 595 B1. Auch das Dokument US 5,564,325 zeigt eine Ausführungsform, bei der über eine Verbindungsöffnung ein permanenter Druckausgleich am Ventilelement stattfindet.

Es ist demgegenüber eine Aufgabe der vorliegenden Erfindung, einen Bremskraftverstärker der eingangs genannten Art bereitzustellen, bei dem in Abhängigkeit von der Betriebssituation in vorteilhafter Weise ein Druckausgleich stattfinden kann, in bestimmten Betriebssituationen aber ein Differenzdruck am Ventilelement aufrechterhalten wird, um die Funktionsweise des Bremskraftverstärkers zu unterstützen.

Diese Aufgabe wird durch einen Bremskraftverstärker der eingangs bezeichneten Art gelöst, bei dem vorgesehen ist, dass über das Ventilelement ein pneumatischer Funktionsraum dichtend abschließbar ist, der nach Maßgabe einer aktuellen Betätigungsstellung des Krafteingangsglieds wahlweise mit der Unterdruckkammer oder der Umgebungsatmosphäre verbindbar ist.

Anders als beim vorstehend beschriebenen Stand der Technik nützt die vorliegende Erfindung den scheinbar bestehenden Nachteil eines nicht immer druckausgeglichenen pneumatischen Funktionsraums am Ventilelement in vorteilhafter Weise aus und sieht von einem permanenten Druckausgleich am Ventilelement durch Vorsehen einer dauerhaft geöffneten Druckausgleichsöffnung ab. Stattdessen nutzt die vorliegende Erfindung gezielt in Abhängigkeit von der aktuellen Betätigungsstellung des Bremskraftverstärkers selektiv eine Druckdifferenz am Ventilelement. Dadurch kann erreicht werden, dass das Ventilelement in bestimmten Betriebssituationen in seiner Dichtfunktion unterstützt wird. Beispielsweise dann, wenn sowohl in der Unterdruckkammer als auch in der Arbeitskammer ein gegenüber dem Atmosphärendruck reduzierter Druck vorliegt, wird das Ventilelement mit Atmosphärendruck gegen die Dichtsitze gedrückt wird und somit die Dichtwirkung erhöht. Diese druckbedingte Komponente der Dichtwirkung erlaubt es, die eigentlich hierfür vorgesehene Spannfeder zum Vorspannen des Dichtelements gegen die Ventilsitze schwächer auszubilden, als bei einem dauerhaft druckentlasteten Ventilelement gemäß dem Stand der Technik. Mit anderen Worten übernimmt der in dem pneumatischen Funktionsraum am Ventilelement herrschende Überdruck, der größer ist, als der im Ausgangszustand in der Arbeitskammer sowie in der Unterdruckkammer herrschende Unterdruck, einen Teil der Anpresswirkung, um die Dichtwirkung zwischen den Dichtsitzen und der Dichtfläche am Ventilelement zu erhöhen.

Die schwächere Ausbildung der Spannfeder hat wiederum den Vorteil, dass die Rückstellfeder, die erforderlich ist, um das Krafteingangsglied zusammen mit dem Betätigungskolben gegen die Wirkung der Spannfeder bei Freigabe des Bremspedals zurückzustellen, ebenfalls schwächer ausgelegt werden kann, weil eine entsprechend reduzierte Federkraft der schwächer ausgebildeten Rückstellfeder zu überwinden ist. Diese Rückstellfeder sorgt aber bei einer Betätigung für eine Widerstandskraft, die ein Fahrer durch die Pedalbetätigung überwinden muss. Bei demzufolge entsprechend schwächer ausgebildeter Rückstellfeder wird diese Betätigungskraft ebenfalls geringer. Insgesamt lassen sich also durch gezielt selektive Ausnutzung eines in dem pneumatischen Funktionsraum herrschenden Drucks die am Ventilelement wirkende Spannfeder und in der Folge die deren Widerstandskraft im Rückstellfall überwindende Rückstellfeder schwächer ausbilden, was dem Fahrer zugutekommt, da er dementsprechend auch nur eine geringere Betätigungskraft bei gleicher Bremswirkung aufbringen muss, als dies beim Stand der Technik der Fall ist.

Gemäß einer Weiterbildung der Erfindung ist vorgesehen, dass die Spannfeder zumindest teilweise in dem pneumatischen Funktionsraum aufgenommen ist. Dies bedeutet, dass der pneumatische Funktionsraum platzsparend auch zur Unterbringung der Rückstellfeder ausgenutzt werden kann. Die Rückstellfeder stützt sich dabei mit einem Ende am Ventilelement und mit ihrem anderen Ende unmittelbar oder über eine zwischengeschaltete Komponente am Steuerventilgehäuse ab.

Eine Weiterbildung der Erfindung sieht vor, dass das Ventilelement wenigstens einen Ventilabschnitt aufweist, der nach Maßgabe einer aktuellen Betätigungsstellung wahlweise pneumatisch dichtet oder einen Fluiddurchlass vorsieht. Das Ventilelement lässt sich also wahlweise in einen Zustand versetzen, in dem es tatsächlich abdichtet und so den pneumatischen Funktionsraum gemäß vorstehender Beschreibung abriegelt, sodass eine darin herrschende Druckdifferenz ausgenutzt werden kann, oder in einen Zustand versetzen, in dem es einen Fluiddurchlass für einen Druckausgleich ermöglicht. Insbesondere ist in diesem Zusammenhang vorgesehen, dass das Ventilelement einen ersten Ventilabschnitt aufweist, der in einer ersten Betriebsstellung einen Fluiddurchlass zur fluidischen Verbindung des pneumatischen Funktionsraums mit der Umgebungsatmosphäre vorsieht und der in einer zweiten Betriebsstellung den pneumatischen Funktionsraum von der Umgebungsatmosphäre isoliert. Ferner sieht eine Weiterbildung in diesem Zusammenhang vor, dass das Ventilelement einen zweiten Ventilabschnitt aufweist, der in der ersten Betriebsstellung den pneumatischen Funktionsraum von der Vakuumkammer isoliert und in der zweiten Betriebsstellung den pneumatischen Funktionsraum mit der Vakuumkammer verbindet. Dabei kann erfindungsgemäß vorgesehen sein, dass sich in der ersten Betriebsstellung der Bremskraftverstärker im Ausgangszustand oder in einem durch Betätigung des Krafteingangsglied aktivierten Zustand befindet und dass sich in der zweiten Betätigungsstellung der Bremskraftverstärker in einem Freigabezustand befindet, in dem er aus dem aktivierten Zustand in den Ausgangzustand zurückkehrt. Mit anderen Worten kann erfindungsgemäß vorgesehen sein, dass in der Ausgangsstellung, das heißt bei unbetätigtem Bremspedal und dementsprechend in einer Ausgangsstellung befindlichen Krafteingangsglied in dem pneumatischen Funktionsraum Atmosphärendruck herrscht, weit das Ventilelement in dieser Ausgangsstellung den pneumatischen Funktionsraum gegenüber der Arbeitskammer und der Unterdruckkammer abdichtet, jedoch eine fluidische Verbindung zwischen der Umgebungsatmosphäre und dem pneumatischen Funktionsraum vorsieht. Wird das Krafteingangsglied durch Betätigen des Bremspedals verlagert, so dass der Bremskraftverstärker sozusagen aktiviert zur Verstärkung der Betätigungskraft wirksam wird, so führt dies dazu, dass, wie eingangs erwähnt, eine fluidische Verbindung zwischen der Arbeitskammer und der Umgebungsatmosphäre zum Druckaufbau in der Arbeitskammer gegenüber der Unterdruckkammer hergestellt wird. Weiterhin herrscht in dieser Betätigungsstellung im pneumatischen Funktionsraum am Ventilelement Atmosphärendruck, der das Ventilelement gegen den Dichtsitz am Steuerventilgehäuse zur Abdichtung der Unterdruckkammer drückt. Auch in einem Gleichgewichtszustand, der sich dann einstellt, wenn die bewegliche Wand zusammen mit dem Steuerventilgehäuse vorgerückt ist und sich beide Ventilsitze wieder bei niedergedrücktem Bremspedal an das Ventilelement anlegen, herrscht im pneumatischen Funktionsraum durch einen entsprechende Verbindung über den ersten Ventilabschnitt Atmosphärendruck.

Wird aber das Bremspedal freigegeben, so dass sich das Krafteingangsglied unter der Wirkung der Rückstellfeder wieder zurück in Richtung seiner Ausgangsstellung bewegt, so wird das Ventilelement vom Steuerkolben zurückbewegt, wobei sich der erste Ventilabschnitt in seine zweite Betätigungsstellung bewegt, in der er den pneumatischen Funktionsraum von der Umgebungsatmosphäre isoliert. Im Rahmen dieser Bewegung wird der zweite Ventilabschnitt gleichsam in die zweite Betätigungsstellung überführt, in der er den pneumatischen Funktionsraum mit der Vakuumkammer verbindet. Dadurch kommt es zu einem Druckausgleich zwischen der Vakuumkammer und dem pneumatischen Funktionsraum, das heißt im pneumatischen Funktionsraum herrscht gegenüber der Umgebungsatmosphäre Unterdruck. Dies bedeutet wiederum, dass die Rückwärtsbewegung, die durch die Rückstellfeder nach Freigabe des Bremspedals veranlasst wird, nicht gegen einen Überdruck im pneumatischen Funktionsraum erfolgen muss, da dieser druckausgeglichen mit der Unterdruckkammer ist.

Mit anderen Worten wird also in der Ausgangsstellung und bei einer Betätigung des Bremskraftverstärkers der pneumatische Funktionsraum als Überdruckkammer genutzt, so dass der im pneumatischen Funktionsraum gegenüber dem in der Arbeitskammer bzw. in der Unterdruckkammer herrschende Überdruck zusätzlich für eine dichte Anlage des Ventilelements an den Dichtsitzen sorgt. Dieser Überdruck macht es möglich, die Spannfeder am Ventilelement schwächer auszulegen. Im Rahmen der Rückstellung muss durch den dann gezielt erfolgenden Druckausgleich nur noch eine geringere Federkraft der entsprechend schwächer ausgelegten Spannfeder überwunden werden, was es ermöglicht, eine gleichsam schwächere Rückstellfeder zu verwenden.

Hinsichtlich der konstruktiven Ausgestaltung des Ventilelements kann vorgesehen sein, dass es zur Ausbildung des wenigstens einen Ventilabschnitts mit wenigstens einer Dichtungslippe ausgebildet ist, die auf einer korrespondierenden Anlagefläche am Steuerventilgehäuse oder an einem mit dem Steuerventilgehäuse gekoppelten Bauteil dichtend abgleitet, wobei die Anlagefläche wenigstens einen lokalen Passagebereich aufweist, der nach Maßgabe der Position der Dichtungslippe einen Fluiddurchlass ermöglicht. Die jeweilige Dichtungslippe dichtet zuverlässig unter Wechselwirkung mit der korrespondierenden Anlagefläche am Steuerventilgehäuse oder an dem mit diesem gekoppelten Bauteil ab. Sobald aber das Ventilelement mit seiner wenigstens einen Dichtungslippe an der Anlagefläche entlang in den lokalen Passagebereich gleitet, wird die Dichtwirkung aufgehoben und es kommt zu einer fluidischen Verbindung. Dabei kann vorgesehen sein, dass der wenigstens eine lokale Passagebereich in Form von lokalen Vertiefungen oder lokalen Vorsprüngen am Steuerventilgehäuse oder an dem mit dem Steuerventilgehäuse gekoppelten Bauteil ausgebildet ist. Die fluidische Verbindung wird also dadurch hergestellt, dass lokale Bypass-Kanäle geschaffen werden, die eine Luftströmung an der jeweiligen Dichtungslippe vorbei zulassen.

Eine Weiterbildung der Erfindung sieht vor, dass das mit dem Steuerventilgehäuse gekoppelte Bauteil von einem darin fixierten Dichtungsring gebildet ist. Dieser Dichtungsring kann nachträglich dichtend eingesetzt werden, was die Montage erleichtert. Vorteilhafterweise stützt sich die Spannfeder auch an diesem Dichtungsring ab. Darüber hinaus kann, wie vorstehend angedeutet, eine Anlagefläche an diesem Dichtungsring ausgebildet sein.

Eine Weiterbildung der Erfindung sieht vor, dass das Ventilelement im Querschnitt ein U-förmiges Profil aufweist, wobei an jedem U-Schenkel, vorzugsweise an dessen freien Ende, jeweils eine Dichtungslippe vorgesehen ist. Das Ventilelement ist dabei insgesamt ringförmig ausgebildet, wobei ein Querschnitt das U-förmige Profil ergibt.

Ferner kann erfindungsgemäß vorgesehen sein, dass das Ventilelement eine Dichtfläche aufweist, die dichtend mit dem ersten und zweiten Dichtsitz in Wechselwirkung bringbar ist. Diese Dichtfläche ist beispielsweise stirnseitig am U-Querschenkel vorgesehen.

Die Erfindung betrifft ferner ein Verfahren zum Betätigen eines Bremskraftverstärkers in der vorstehend beschriebenen Art, wobei die Dichtfläche am U-Querschenkel vorgesehen ist. Das erfindungsgemäße Verfahren zeichnet sich, wie vorstehend bereits hinsichtlich des erfindungsgemäßen Bremskraftverstärkers erläutert, durch die selektive Ausnutzung eines Überdrucks im pneumatischen Funktionsraum und eines daraus resultierenden Differenzdrucks am Ventilelement aus.

Die Erfindung wird im Folgenden beispielhaft anhand der beiliegenden Figuren erläutert. Es stellen dar:
- Fig. 1: einen Ausschnitt eines erfindungsgemäßen Bremskraftverstärkers in Längsschnittansicht, während dieser sich in der unbetätigten Ausgangsstellung befindet;
- Fig. 2: eine Ansicht entsprechend Fig. 1 in einer Stellung, bei der das Krafteingangsglied durch Bremspedalbetätigung betätigt wurde; und
- Fig. 3: eine Ansicht entsprechend Fign. 1 und 2, bei der das Krafteingangsglied durch Freigabe des Bremspedals freigegeben wurde, so dass sich dieses unter Wirkung der Rückstellfeder zurückbewegt.

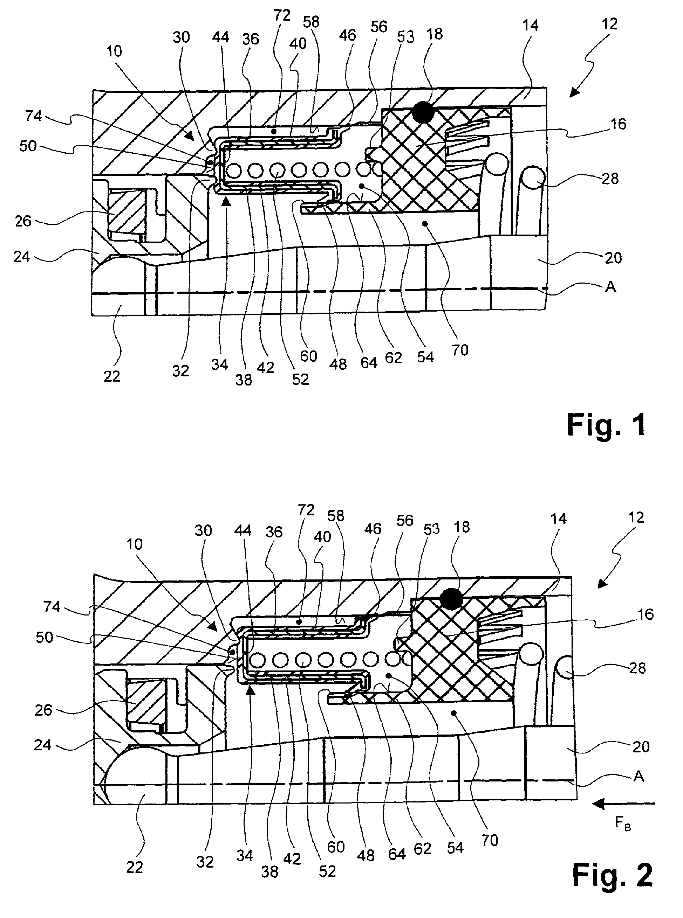

Figuren 1 bis 3 zeigen einen Ausschnitt eines Steuerventils 10 eines erfindungsgemäßen Bremskraftverstärkers 12 für eine Kraftfahrzeugbremsanlage.

Die grundsätzliche Funktionsweise des Bremskraftverstärkers zur Verstärkung einer über ein Bremspedal ausgeübten Betätigungskraft mittels einer Kammeranordnung über eine bewegliche Wand, an der in Abhängigkeit von einer aktuellen Betätigung eine bremskraftunterstützende Druckdifferenz erzeugbar ist, gleicht der üblichen Funktionsweise, wie sie aus dem Stand der Technik bekannt ist, beispielsweise aus den eingangs erwähnten Dokumenten zum Stand der Technik. Es wird daher im Folgenden auf die Besonderheiten des Bremskraftverstärkers 12, insbesondere des Steuerventils 10 der vorliegenden Erfindung eingegangen.

Das Steuerventil 10 weist ein Steuerventilgehäuse 14 auf. An diesem ist ein Haltering 16 fixiert und über eine Ringdichtung 18 dichtend angebracht. In dem Steuerventilgehäuse 14 ist ein mit einem Bremspedal gekoppeltes Krafteingangsglied 20 verlagerbar geführt. Das Krafteingangsglied 20 weist einen sphärischen Kopf 22 auf, der in einem Steuerkolben 24 aufgenommen und zur gemeinsamen Bewegung mit diesem fixiert ist. Der Steuerkolben 24 weist ein dessen Bewegung gegenüber dem Steuerventilgehäuse 14 begrenzendes Riegelelement 26 auf. Das Krafteingangsglied 20 ist über eine Rückstellfeder 28 in die in Fig.1 gezeigte Ausgangsstellung gegenüber dem Steuerventilgehäuse 14 vorgespannt. Die Rückstellfeder 28 stützt sich mit einem Ende an dem Haltering 16 ab und mit ihrem anderen Ende an einem nicht gezeigten Bereich des Krafteingangsglieds 20. Sie ist konisch ausgebildet.

An dem Steuerventilgehäuse 14 ist ein erster Dichtsitz 30 vorgesehen, der in Form einer ringförmigen Wulst in Umfangsrichtung um eine Längsachse A des Steuerventilgehäuses verläuft. Radial weiter innen ist an dem Steuerkolben 24 ein zweiter Dichtsitz 32 angeordnet, der gleichsam um die Längsachse A in Form einer ringförmigen Wulst verläuft. Ferner ist in dem Bereich nahe den Dichtsitzen 30, 32 ein Ventilelement 34 vorgesehen. Dieses ist ringförmig ausgebildet und erstreckt sich in Umfangsrichtung um die Längsachse A. Es hat in dem in Figur 1 gezeigten Schnitt ein U-förmiges Profil. Das Ventilelement 34 weist ein ringförmiges Blechteil 36 mit entsprechendem U-Profil auf, das von einer gummielastischen Schicht 38 umgeben ist. Das Ventilelement 34 weist in der Schnittansicht gemäß Figuren 1 bis 3 einen radial äußeren Längsschenkel 40 und einen radial inneren Längsschenkel 42 sowie einen Querschenkel 44 auf. An den freien Enden der beiden Längsschenkel 40 und 42 sind jeweils Dichtlippen 46, 48 vorgesehen. Der Querschenkel 44 bildet an seiner in Figuren 1 bis 3 nach links weisenden Stirnseite eine Dichtfläche 50 aus, die mit den beiden Dichtsitzen 30 und 32 in fluiddichte Anlage bringbar ist. Ferner erkennt man eine Spannfeder 52, die sich an dem Haltering 16 mit ihrem einen Ende abstützt und an diesem über einen ringförmigen Vorsprung 53 positioniert ist, und die mit ihrem anderen Ende das Ventilelement 34 in Richtung auf die beiden Dichtsitze 30, 32 zu drückt.

Das Ventilelement 34 ist unter bzw. entgegen der Wirkung der Spannfeder 52 in Richtung der Längsachse A relativ zum Steuerventilgehäuse 14 verlagerbar. Es schließt mit dem Steuerventilgehäuse 14 sowie dem Haltering 16 einen pneumatischen Funktionsraum 54 ein. In diesem pneumatischen Funktionsraum 54 ist die Spannfeder 52 aufgenommen.

In Figur 1 erkennt man ferner, dass in dem Steuerventilgehäuse 14 nahe dem Anlagebereich des Halterings 16 lokale schlitzartige Vertiefungen 56 vorgesehen sind. Diese sind über den Umfang regelmäßig verteilt und in die Innenumfangsfläche 58 des Steuerventilgehäuses 14 eingearbeitet. Vergleichbare schlitzartige Vertiefungen 60 sind an einem rohrabschnittartigen Vorsprung 62 des Halterings 16 vorgesehen. Diese Vertiefungen 60 erstrecken sind in regelmäßigen Winkelabständen um die Außenumfangsfläche 64 dieses rohrartigen Vorsprungs 62 herum.

Im Folgenden soll auf die Funktionsweise des Steuerventils 10 in Abhängigkeit von einer Betätigung des Krafteingangsglieds 20 eingegangen werden. Figur 1 zeigt die Ausgangsstellung des Bremskraftverstärkers 12, das heißt einen Zustand, bei dem das Bremspedal noch nicht betätigt wurde und bei dem sich das Krafteingangsglied 20 in einem unbetätigten Zustand befindet. In diesem Zustand herrscht in einem Bereich 70 um das Krafteingangsglied 20 herum und damit in dem Bereich 70 radial innerhalb des Ventilelements Atmosphärendruck. In einem Bereich 72 radial außerhalb des Ventilelements 34, der mit der Unterdruckkammer verbunden ist, herrscht der in der Unterdruckkammer anliegende Unterdruck (Vakuum). In einem Bereich 74 zwischen den Ventilsitzen 30, 32, der fluidisch mit der Arbeitskammer verbunden ist, herrscht in diesem Betriebszustand ebenfalls im Wesentlichen Unterdruck. In der Ausgangsstellung ist das Ventilelement 34 über die Spannfeder 62 in Anlage mit beiden Ventilsitzen 30, 32 gedrückt. Die äußere Dichtlippe 46 liegt an der Innenumfangsfläche 58 des Steuerventilgehäuses 14 dichtend an. Sie befindet sich außerhalb, das heißt axial vorgerückt gegenüber den Vertiefungen 56.

Die innere Dichtlippe 48 hingegen befindet sich in dieser Ausgangsstellung in Anlage mit einem Außenumfangsflächenbereich der Außenumfangsfläche 64, in dem die Schlitze 60 vorgesehen sind. Somit dichtet die Dichtlippe 48 den pneumatischen Funktionsraum 54 nicht gegenüber dem permanent unter Atmosphärendruck stehendem Raum 70 ab. Stattdessen besteht eine fluidische Verbindung zwischen dem Raum 70 und dem pneumatischen Funktionsraum 54. Es herrscht daher im pneumatischen Funktionsraum 54 ebenfalls Atmosphärendruck. Dies hat den Effekt, dass an dem Ventilelement 34 aufgrund des im pneumatischen Funktionsraum 54 herrschenden Atmosphärendrucks, der größer ist, als der Unterdruck in dem Bereich 72 und in dem Bereich 74, eine Druckdifferenz anliegt, mit der es zusätzlich zu der Spannkraft der Spannfeder 52 an die Ventilsitze 30, 32 angedrückt wird. Maßgeblich für diese zusätzliche Anpresskraft ist der Differenzdruck zwischen dem pneumatischen Funktionsraum 54 (Atmosphärendruck) und den mit der Unterdruckkammer bzw. Arbeitskammer verbundenen Bereichen 72, 74 radial außerhalb des Dichtsitzes 32 (Vakuum).

Figur 2 zeigt eine Betätigungsstellung. Durch Betätigen des Bremspedals wird eine Kraft F_{B} auf das Krafteingangsglied 20 ausgeübt, so dass dieses in dem Steuerventilgehäuse 14 vorrückt. Aufgrund der Bewegungskopplung mit dem Steuerkolben 24 bewegt sich dieser ebenfalls in Richtung der Längsachse A nach links gegenüber dem Steuerventilgehäuse 14 vor. Dabei wird der Dichtsitz 32 von der Dichtfläche 50 abgehoben, so dass es zu einer fluidischen Verbindung zwischen dem Raum 70 und dem mit der Arbeitskammer verbundenen Raum 74 kommt. Mit anderen Worten baut sich in der Arbeitskammer über die fluidische Verbindung durch Abheben des Dichtsitzes 32 Atmosphärendruck auf. Der Dichtsitz 30 bleibt in dichtender Anlage mit der Dichtfläche 50, so dass in dem mit der Unterdruckkammer verbundenen Bereich 72 weiterhin Unterdruck herrscht. Auch der pneumatische Funktionsraum 54 bleibt über die Schlitze 60 in Verbindung mit dem Bereich 70, so dass im pneumatischen Funktionsraum 54 weiterhin Atmosphärendruck herrscht. Die radial äußere Dichtlippe 46 dichtet weiterhin den pneumatischen Funktionsraum 54 gegenüber dem mit der Unterdruckkammer verbundenen Bereich 72 ab. Es besteht also nach wie vor eine Druckdifferenz am Ventilelement 34 zwischen dem pneumatischen Funktionsraum 54 und dem mit der Unterdruckkammer verbundenen Bereich 72. Diese Druckdifferenz (Überdruck in dem pneumatischen Funktionsraum 54) sorgt dafür, dass das Ventilelement 34 zusätzlich zu der Wirkung der Spannfeder 52 weiterhin in dichtende Anlage mit dem Dichtsitz 30 gedrückt wird.

Diese Druckdifferenz zwischen dem pneumatischen Funktionsraum 54 und dem mit der Unterdruckkammer verbundenen Bereich 72 kann also in der gerade betätigten Betriebsstellung gemäß Figur 2 dazu genutzt werden, um das Ventilelement gegen den Dichtsitz 30 anzupressen. Anzumerken ist, dass die Druckdifferenz lediglich in dem effektiven Flächenbereich des Ventilelements 34 radial außerhalb des Dichtsitzes 30 Wirkung entfaltet.

Bekanntermaßen reagiert der Bremskraftverstärker 12 in Folge einer Betätigung, wie sie in Figur 2 gezeigt ist, derart, dass wegen des Aufbaus eines Differenzdrucks an der beweglichen Wand (nicht gezeigt) das Steuerventilgehäuse 14 in Figur 2 entlang der Längsachse A nach links nachrückt. In entsprechender Weise rückt das Ventilelement nach und folgt somit der Bewegung des Steuerkolbens, so dass es schließlich in einem Gleichgewichtszustand dazu kommt, dass sich das Ventilelement 34 mit seiner Anlagefläche 50 wieder an den Dichtsitz 32 anlegt und diesen schließt. Auch in diesem Gleichgewichtszustand herrscht ein Überdruck im pneumatischen Funktionsraum 54 gegenüber der Unterdruckkammer und dem mit dieser verbundenen Bereich 72. Dieser Gleichgewichtszustand liegt dann vor, wenn ein Fahrer beispielsweise das Bremspedal in einem bestimmten Betätigungszustand hält und seine Betätigungskraft über den Bremskraftverstärker in konstantem Maße verstärkt wird.

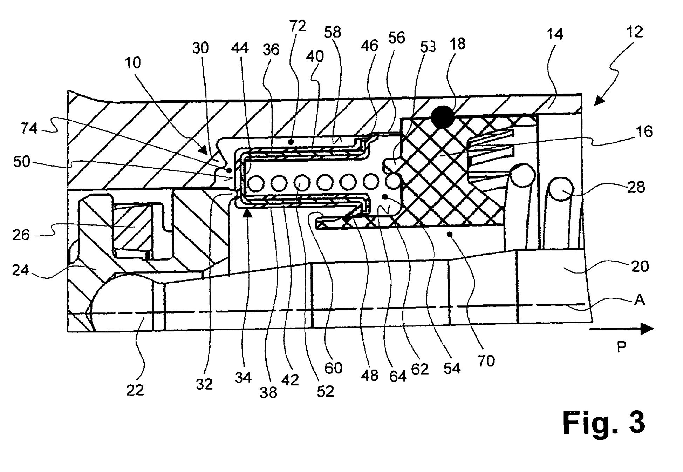

Gibt der Fahrer nun das Bremspedal zur Beendigung des Bremsvorgangs wieder frei, so bewegt sich das Krafteingangsglied 20 aus dem Zustand gemäß Figur 2 und der Wirkung der Rückstellfeder 28 in Richtung zu dem Ausgangszustand gemäß Figur 1 zurück. Dieser Rückstellvorgang ist in Figur 3 gezeigt.

Die Rückstellfeder 28 entspannt sich und drückt das Krafteingangsglied 20 entlang der Längsachse A nach rechts. Dabei wird das Ventilelement 34 über den Steuerkolben 24 und den an diesem angeformten Dichtsitz 32 gegen die Wirkung der Spannfeder 52 in Figur 3 nach rechts bewegt. Das Steuerventilgehäuse 14 verbleibt zunächst in der vorgerückten Stellung gemäß Figur 2. Mit anderen Worten wird also in Folge der Rückstellbewegung des Krafteingangsglieds 20 das Ventilelement 34 relativ zum Steuergehäuse 14 nach rechts verschoben, wobei die Spannfeder 52 unter der Wirkung der Rückstellfeder 28 komprimiert wird. Dadurch wird der Dichtsitz 30 von der Dichtfläche 50 abgehoben, so dass es zu einer fluidischen Verbindung zwischen dem mit der Unterdruckkammer fluidisch verbundenen Bereich 72 und dem mit der Arbeitskammer fluidisch verbundenen Bereich 74 kommt. In der Folge kann sich ein Druckausgleich an der beweglichen Wand einstellen.

Wesentlich ist aber, dass in Folge dieser Bewegung des Krafteingangsglieds 20 und der daraus resultierenden Verschiebung des Ventilelements 34 relativ zum Steuerventilgehäuse 14 die untere Dichtlippe 48 nun aus dem Bereich der Vertiefungen 60 herausgeschoben und in dichtende Anlage mit der Außenumfangsfläche 64 des Halterings 16 gebracht wird. Dadurch wird der pneumatische Funktionsraum 54 dichtend gegenüber dem Bereich 70 und damit gegenüber der Umgebungsatmosphäre abgeschlossen. Andererseits wird durch die Verschiebung des Ventilelements 34 die äußere Dichtlippe 46 aus ihrer dichtenden Anlage mit der Innenumfangsfläche 58 herausgeschoben und in den Bereich der Vertiefungen 56 hineinverlagert. In diesem Bereich sorgt die Dichtlippe 46 für keine fluidische Abdichtung zwischen dem pneumatischen Funktionsraum 54 und dem Bereich 72 mehr. Stattdessen wird über die Vertiefungen 56 eine fluidische Verbindung zwischen dem pneumatischen Funktionsraum 54 und dem Bereich 72 hergestellt. Es kommt demzufolge zu einem Druckausgleich zwischen dem mit der Unterdruckkammer verbundenen Bereich 72 und dem pneumatischen Funktionsraum 54. Dies bedeutet, dass unmittelbar bei der Rückstellbewegung des Krafteingangsglieds 20 der pneumatische Funktionsraum 54 druckentlastet wird, sodass bei Verlagerung des Ventilelements 34 in Figur 3 nach rechts durch die Wirkung der Rückstellfeder 28 lediglich der Gegenkraft der Spannfeder 52 entgegengewirkt werden muss, nicht aber einem Überdruck, der im pneumatischen Funktionsbereich 54 vorhanden war. Mit anderen Worten wird also bei der Rückstellbewegung der pneumatische Funktionsbereich 54 druckentlastet, sodass der vorhergehend in diesem pneumatischen Funktionsraum 54 herrschende Überdruck nach diesem Druckausgleich der Rückstellbewegung nicht mehr entgegenwirkt.

Sobald sich ein entsprechender Druckausgleich an der nicht gezeigten beweglichen Wand eingestellt hat, rückt das Steuerventilgehäuse 14 unter der Wirkung einer nicht gezeigten Rückstellfeder zurück und legt sich mit seinem Dichtsitz 30 wieder an die Dichtfläche 50 an. Durch diese Relativbewegung kann sich die Spannfeder 52 wieder entspannen. Der Bremskraftverstärker nimmt schließlich die Ausgangsstellung gemäß Figur 1 ein.

Die vorstehende Schilderung der Funktionsweise des erfindungsgemäßen Bremskraftverstärkers zeigt also, dass der pneumatische Funktionsraum 54 in Abhängigkeit von der aktuellen Betätigungsstellung des Krafteingangsglieds 20 und damit in Abhängigkeit von der aktuellen Betriebsstellung des Ventilelements 34 wahlweise als "Druckkammer" gegenüber der Unterdruckkammer und dem mit dieser verbundenen Bereich 72 wirken kann, oder zu dem mit der Unterdruckkammer verbundenen Bereich 72 druckausgeglichen gehalten werden kann. Dadurch ist es möglich dann, wenn es auf eine dichtende Anlage mit dem Dichtsitz 30 ankommt, den Überdruck zur Beibehaltung dieser dichtenden Anlage auszunützen. Hingegen wird durch diese Funktionsweise dann, wenn eine Rückstellwirkung erfolgen soll, unmittelbar bei Einsetzen der Rückstellbewegung für eine Druckentlastung des pneumatischen Funktionsraums 54 gesorgt, so dass der darin herrschende Druck der Rückstellbewegung nicht entgegenwirkt.

Das selektive Ausnützen eines Überdrucks in dem pneumatischen Funktionsraum 54 zur Aufrechterhaltung der Dichtwirkung am Dichtsitz 30 erlaubt es, die Spannfeder 52 insgesamt schwächer auszubilden, als dies im Stand der Technik der Fall ist, bei dem ein dem pneumatischen Funktionsraum 54 entsprechender Volumenbereich dauerhaft in jeder Betätigungsstellung des Krafteingangsglieds druckentlastet ist. Die durch die erfindungsgemäße selektive Ausnützung des pneumatischen Funktionsraums 54 als Druckkammer mögliche schwächere Auslegung der Spannfeder 52 ermöglicht es wiederum, die Rückstellfeder 28 schwächer auszubilden, weil diese im Falle der Rückstellbewegung eine entsprechend schwächere Gegenkraft der schwächer ausgelegten Spannfeder 52 überwinden muss. Die schwächere Ausgestaltung der Rückstellfeder 28 führt wiederum dazu, dass bei einer Betätigung des Bremspedals zur Auslenkung des Krafteingangsglieds 20 eine geringere Widerstandskraft, nämlich die entsprechend reduzierte Gegenkraft der Rückstellfeder 28, zu überwinden ist.

Mit der Erfindung ist es also möglich, durch gezielte selektive Nutzung des pneumatischen Funktionsraums 54 die Spannfeder 52 und in Folge dessen die Rückstellfeder 28 schwächer auszulegen, was insgesamt die Betätigung des Bremskraftverstärkers gegenüber dem Stand der Technik erleichtert. Dieser Vorteil wird durch relativ einfache konstruktive Maßnahmen am Ventilelement 34 erreicht, ohne den grundsätzlichen Aufbau des Bremskraftverstärkers wesentlich zu verändern.

Insgesamt ergibt sich mit der vorliegenden Erfindung ein gegenüber dem Stand der Technik hinsichtlich seiner Funktionsweise und insbesondere hinsichtlich der Kraftbilanz erheblich verbesserter Bremskraftverstärker.

## Patentansprüche

1. Bremskraftverstärker (12) für eine Kraftfahrzeugbremsanlage, umfassend
- ein mit einem Bremspedal verbundenes oder verbindbares Krafteingangsglied (20),
- eine Kammeranordnung mit einer Arbeitskammer (74) und einer Unterdruckkammer (72), die über eine bewegliche Wand voneinander getrennt sind, und
- eine Steuereinrichtung mit einem Steuerventil (10), über das in Folge einer Verlagerung des Krafteingangsglieds (20) die Arbeitskammer (74) wahlweise mit der Unterdruckkammer (72) oder der Umgebungsatmosphäre (70) verbindbar ist,
wobei das Steuerventil (10) ein mit der beweglichen Wand gekoppeltes Steuerventilgehäuse (14) aufweist, in dem das Krafteingangsglied (20) zusammen mit einem Steuerkolben (24) gegen die Wirkung einer Rückstellfeder (28) verlagerbar geführt ist, und wobei weiter das Steuerventil (10) ein Ventilelement (34) aufweist, das mittels einer Spannfeder (52) wahlweise in dichtende Anlage mit einem ersten Ventilsitz (30), der an dem Steuerventilgehäuse (14) vorgesehen ist, und in dichtende Anlage mit einem zweiten Ventilsitz (32) vorgespannt ist, der an dem Steuerkolben (24) des Steuerventils (10) vorgesehen ist,
**dadurch gekennzeichnet, dass** über das Ventilelement (34) ein pneumatischer Funktionsraum (54) dichtend abschließbar ist, der nach Maßgabe einer aktuellen Betätigungsstellung des Krafteingangsglieds (20) wahlweise mit der
Unterdruckkammer (72) oder der Umgebungsatmosphäre (70) verbindbar ist.

2. Bremskraftverstärker (12) nach Anspruch 1,
**dadurch gekennzeichnet, dass** die Spannfeder (52) zumindest teilweise in dem pneumatischen Funktionsraum (54) aufgenommen ist.

3. Bremskraftverstärker (12) nach Anspruch 1 oder Anspruch 2,
**dadurch gekennzeichnet, dass** das Ventilelement (34) wenigstens einen Ventilabschnitt (46, 48) aufweist, der nach Maßgabe einer aktuellen Betätigungsstellung pneumatisch dichtet oder einen Fluiddurchlass vorsieht.

4. Bremskraftverstärker (12) nach Anspruch 3,
**dadurch gekennzeichnet, dass** das Ventilelement (34) einen ersten Ventilabschnitt (48) aufweist, der in einer ersten Betriebsstellung einen Fluiddurchlass zur fluidischen Verbindung des pneumatischen Funktionsraums (54) mit der Umgebungsatmosphäre (70) vorsieht und der in einer zweiten Betriebsstellung den pneumatischen Funktionsraum (54) von der Umgebungsatmosphäre (70) isoliert.

5. Bremskraftverstärker nach Anspruch 4,
**dadurch gekennzeichnet, dass** das Ventilelement (34) einen zweiten Ventilabschnitt (46) aufweist, der in der ersten Betriebsstellung den pneumatischen Funktionsraum (54) von der Vakuumkammer (72) isoliert und in der zweiten Betriebsstellung den pneumatischen Funktionsraum (54) mit der Vakuumkammer (72) fluidisch verbindet.

6. Bremskraftverstärker (12) nach Anspruch 4 oder Anspruch 5,
**dadurch gekennzeichnet, dass** sich in der ersten Betriebsstellung der Bremskraftverstärker (12) im Ausgangszustand oder in einem durch Betätigung des Krafteingangsglied (20) aktivierten Zustand befindet und dass sich in der zweiten Betriebsstellung der Bremskraftverstärker (12) in einem Freigabezustand befindet, in dem er aus dem aktivierten Zustand in den Ausgangzustand zurückkehrt.

7. Bremskraftverstärker (12) nach einem der Ansprüche 4 bis 6,
**dadurch gekennzeichnet, dass** das Ventilelement (34) zur Ausbildung des wenigstens einen Ventilabschnitts mit wenigstens einer Dichtungslippe (46, 48) ausgebildet ist, die auf einer korrespondierenden Anlagefläche (58, 64) am Steuerventilgehäuse (14) oder an einem mit dem Steuerventilgehäuse gekoppelten Bauteil dichtend abgleitet, wobei die Anlagefläche (58, 64) wenigstens einen lokalen Passagebereich (56, 60) aufweist, der nach Maßgabe der Position der Dichtungslippe (46, 48) einen Fluiddurchlass ermöglicht.

8. Bremskraftverstärker (12) nach Anspruch 7,
**dadurch gekennzeichnet, dass** der wenigstens eine lokale Passagebereich in Form von lokalen Vertiefungen (46, 48) oder lokalen Vorsprüngen am Steuerventilgehäuse (14) oder an dem mit dem Steuerventilgehäuse (14) gekoppelten Bauteil (16) ausgebildet ist.

9. Bremskraftverstärker (12) nach Anspruch 7 oder 8,
**dadurch gekennzeichnet, dass** das mit dem Steuerventilgehäuse (14) gekoppelte Bauteil (16) von einem darin fixierten Dichtungsring gebildet ist.

10. Bremskraftverstärker (12) nach einem der vorangehenden Ansprüche,
**dadurch gekennzeichnet, dass** das Ventilelement (34) im Querschnitt ein U-förmiges Profil aufweist, wobei an jedem U-Schenkel (40, 42), vorzugsweise an dessen freien Ende, jeweils eine Dichtungslippe (46, 48) vorgesehen ist.

11. Bremskraftverstärker (12) nach einem der vorangehenden Ansprüche,
**dadurch gekennzeichnet, dass** das Ventilelement (34) eine Dichtfläche (30) aufweist, die dichtend mit dem ersten und zweiten Dichtsitz (30, 32) in Wechselwirkung bringbar ist.

12. Bremskraftverstärker (12) nach Anspruch 11,
**dadurch gekennzeichnet, dass** die Dichtfläche (50) am U-Querschenkel (44) vorgesehen ist.

13. Verfahren zum Betätigen eines Bremskraftverstärkers nach einem der vorangehenden Ansprüche, wobei der pneumatische Funktionsraum im Ruhezustand sowie in einer betätigten Stellung des Bremskraftverstärkers fluidisch mit der Umgebungsatmosphäre verbunden ist und von der Vakuumkammer dichtend abgetrennt ist und wobei der pneumatische Funktionsraum bei Freigabe des Krafteingangsglied mit der Vakuumkammer fluidisch verbunden wird und von der Umgebungsatmosphäre dichtend abgetrennt wird.

## Claims

1. Brake booster (12) for a motor vehicle brake system, comprising
- a force input element (20) that is or can be coupled to a brake pedal,
- a chamber arrangement with a working chamber (74) and a vacuum chamber (72) that are separated from one another by a movable wall, and
- a control device with a control valve (10), by means of which the working chamber (74) can be optionally connected to the vacuum chamber (72) or to the surrounding atmosphere (70) as a result of a displacement of the force input element (20),
wherein the control valve (10) comprises a control valve housing (14), which is coupled to the movable wall and in which the force input element (20) is guided in a displaceable manner against the action of a return spring (28) together with a control piston (24), and wherein the control valve (10) further comprises a valve element (34) that is optionally prestressed into sealed abutment on a first valve seat (30) provided on the control valve housing (14) and into sealed abutment on a second valve seat (32) provided on the control piston (24) of the control valve (10) by means of a tension spring (52),
**characterized in that** a pneumatic function chamber (54) can be closed in a sealing manner by means of the valve element (34) and can be optionally connected to the vacuum chamber (72) or to the surrounding atmosphere (70) according to a current actuating position of the force input element (20).

2. Brake booster (12) according to claim 1,
**characterized in that** the tension spring (52) is at least partially accommodated in the pneumatic function chamber (54).

3. Brake booster (12) according to claim 1 or claim 2,
**characterized in that** the valve element (34) comprises at least one valve portion (46, 48), which in accordance with a current actuating position pneumatically seals or provides a passage of fluid.

4. Brake booster (12) according to claim 3,
**characterized in that** the valve element (34) comprises a first valve portion (48), which in a first operating position provides a passage of fluid for the fluid connection of the pneumatic function chamber (54) to the surrounding atmosphere (70) and which in a second operating position isolates the pneumatic function chamber (54) from the surrounding atmosphere (70).

5. Brake booster according to claim 4,
**characterized in that** the valve element (34) comprises a second valve portion (46), which in the first operating position isolates the pneumatic function chamber (54) from the vacuum chamber (72) and in the second operating position fluidically connects the pneumatic function chamber (54) to the vacuum chamber (72).

6. Brake booster (12) according to claim 4 or claim 5,
**characterized in that** in the first operating position the brake booster (12) is situated in the initial state or in an activated state as a result of actuation of the force input element (20) and that in the second operating position the brake booster (12) is situated in a release state, in which it returns from the activated state to the initial state.

7. Brake booster (12) according to one of claims 4 to 6,
**characterized in that** the valve element (34) in order to form the at least one valve portion is configured with at least one sealing lip (46, 48), which slides in a sealing manner along a corresponding contact surface (58, 64) on the control valve housing (14) or on a component coupled to the control valve housing, wherein the contact surface (58, 64) has at least one local passage region (56, 60), which in accordance with the position of the sealing lip (46, 48) enables a passage of fluid.

8. Brake booster (12) according to claim 7,
**characterized in that** the at least one passage region is configured in the form of local recesses (46, 48) or local projections on the control valve housing (14) or on a component (16) coupled to the control valve housing (14).

9. Brake booster (12) according to claim 7 or 8,
**characterized in that** the component (16) coupled to the control valve housing (14) is formed by a sealing ring that is fixed therein.

10. Brake booster (12) according to one of the preceding claims,
**characterized in that** the valve element (34) in cross section has a U-shaped profile, wherein on each U-limb (40, 42), preferably on the free end thereof, a sealing lip (46, 48) is provided.

11. Brake booster (12) according to one of the preceding claims,
**characterized in that** the valve element (34) has a sealing surface (30) that may be moved sealingly into interaction with the first and second sealing seat (30, 32).

12. Brake booster (12) according to claim 11,
**characterized in that** the sealing surface (50) is provided on the transverse U-limb (44).

13. Method of actuating a brake booster according to one of the preceding claims, wherein the pneumatic function chamber in the non-operated state as well as in an actuated position of the brake booster is fluidically connected to the surrounding atmosphere and is sealingly separated from the vacuum chamber and wherein the pneumatic function chamber upon release of the force input element is fluidically connected to the vacuum chamber and sealingly separated from the surrounding atmosphere.

## Revendications

1. Servofrein (12) pour un système de freinage de véhicule automobile, comprenant
- un organe d'entrée de force (20) relié ou pouvant être relié à une pédale de frein,
- un agencement de chambres comportant une chambre de travail (74) et une chambre de dépression (72) qui sont séparées l'une de l'autre par une paroi mobile, et
- un dispositif de commande comportant une soupape de commande (10) par le biais de laquelle, à la suite d'un déplacement de l'organe d'entrée de force (20), la chambre de travail (74) peut être sélectivement reliée à la chambre de dépression (72) ou à l'atmosphère ambiante (70),
la soupape de commande (10) présentant un carter de soupape de commande (14) qui est couplé à la paroi mobile et dans lequel l'organe d'entrée de force (20) est guidé de manière déplaçable conjointement avec un piston de commande (24) contre l'action d'un ressort de rappel (28), et la soupape de commande (10) présentant en outre un élément de soupape (34) qui est pressé au moyen d'un ressort de tension (52) sélectivement en contact étanche avec un premier siège de soupape (30) qui est disposé sur le carter de soupape de commande (14), et en contact étanche avec un deuxième siège de soupape (32) qui est disposé sur le piston de commande (24) de la soupape de commande (10),
**caractérisé en ce qu'**un espace fonctionnel (54) pneumatique, qui peut être sélectivement relié à la chambre de dépression (72) ou à l'atmosphère ambiante (70) en fonction d'une position d'actionnement effective de l'organe d'entrée de force (20), peut être fermé de manière étanche par l'élément (34) de soupape.

2. Servofrein (12) selon la revendication 1,
**caractérisé en ce que** le ressort de tension (52) est pour le moins partiellement logé dans l'espace fonctionnel (54) pneumatique.

3. Servofrein (12) selon la revendication 1 ou 2,
**caractérisé en ce que** l'élément de soupape (34) présente au moins un segment de soupape (46, 48) qui ferme de manière étanche ou permet le passage d'un fluide, en fonction d'une position d'actionnement effective.

4. Servofrein (12) selon la revendication 3,
**caractérisé en ce que** l'élément de soupape (34) présente un premier segment de soupape (48) qui, dans une première position de fonctionnement, permet le passage d'un fluide pour assurer la liaison fluidique entre l'espace fonctionnel (54) pneumatique et l'atmosphère ambiante (70), et qui, dans une deuxième position de fonctionnement, isole l'espace fonctionnel (54) pneumatique de l'atmosphère ambiante (70).

5. Servofrein (12) selon la revendication 4,
**caractérisé en ce que** l'élément de soupape (34) présente un deuxième segment de soupape (46) qui, dans une première position de fonctionnement, isole l'espace fonctionnel (54) pneumatique de la chambre de dépression (72), et qui, dans une deuxième position de fonctionnement, relie de manière fluidique l'espace fonctionnel (54) pneumatique et la chambre de dépression (72).

6. Servofrein (12) selon la revendication 4 ou 5,
**caractérisé en ce que** dans la première position de fonctionnement, le servofrein (12) se trouve dans un état initial ou dans un état activé par l'actionnement de l'organe d'entrée de force (20), et **en ce que** dans la deuxième position de fonctionnement, le servofrein (12) se trouve dans un état de libération dans lequel il quitte l'état activé pour revenir à l'état initial.

7. Servofrein (12) selon l'une des revendications 4 à 6,
**caractérisé en ce que** l'élément de soupape (34) destiné à former ledit au moins un segment de soupape est pourvu d'au moins une lèvre d'étanchéité (46, 48) qui glisse de manière étanche sur une surface d'appui (58, 64) correspondante sur le carter de soupape de commande (14) ou sur un élément couplé au carter de soupape de commande (14), la surface d'appui (58, 64) présentant au moins une zone de passage (56, 60) locale qui permet le passage d'un fluide en fonction de la position de la lèvre d'étanchéité (56, 58).

8. Servofrein (12) selon la revendication 7,
**caractérisé en ce que** ladite au moins une zone de passage locale est réalisée sous la forme de cavités (46, 48) locales ou de saillies locales sur le carter de soupape de commande (14) ou sur l'élément (16) couplé au carter de soupape de commande (14).

9. Servofrein (12) selon la revendication 7 ou 8,
**caractérisé en ce que** l'élément (16) couplé au carter de soupape de commande (14) est formé par un anneau d'étanchéité fixé dans celui-ci.

10. Servofrein (12) selon l'une des revendications précédentes,
**caractérisé en ce que** l'élément de soupape (34) présente en coupe transversale un profil en U, une lèvre d'étanchéité (46, 48) étant prévue sur chaque branche (40, 42) du U, de préférence sur l'extrémité libre de celle-ci.

11. Servofrein (12) selon l'une des revendications précédentes,
**caractérisé en ce que** l'élément de soupape (34) présente une surface d'étanchéité (30) qui peut être amenée à interagir de manière étanche avec le premier et le deuxième siège étanche (30, 32).

12. Servofrein (12) selon la revendication 11,
**caractérisé en ce que** la surface d'étanchéité (50) est prévue sur la barre transversale (44) du U.

13. Procédé servant à actionner un servofrein selon l'une des revendications précédentes, l'espace fonctionnel pneumatique étant, à l'état de repos et dans une position actionnée du servofrein, relié de manière fluidique à l'atmosphère ambiante et séparée de manière étanche de la chambre de dépression, et l'espace fonctionnel pneumatique étant, lors de la libération de l'organe d'entrée de force relié de manière fluidique à la chambre de dépression et séparé de manière étanche de l'atmosphère ambiante.
